(19)

Europäisches
Patentamt
European
Patent Office
Office européen
des brevets

(11) **EP 2 853 751 A1**

(12) **EUROPEAN PATENT APPLICATION**

(43) Date of publication:
**01.04.2015 Bulletin 2015/14**

(51) Int Cl.:
**F04D 27/00** *(2006.01)*

(21) Application number: **13186292.2**

(22) Date of filing: **27.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
• **Flensborg, Per
3250 Gilleleje (DK)**
• **Ploeger, Frans
DK-3400 Hilleroed (DK)**

(54) **Control of compressor with variable speed and variable exit guide vanes**

(57) A compressor (CO) is driven by a variable speed drive (VSD) and comprises a variable outlet guide vane diffuser (VD). As long as the guide vanes are not fully open, the compressor is controlled mainly by adjusting the guide vanes and adapting the speed to the vane position. When the guide vanes are fully open, the compressor is controlled by adjusting the speed only.

FIG 1

**Description**

The invention relates to a method to control a compressor unit, wherein said compressor unit comprises a variable speed drive and a compressor, wherein said compressor comprises a variable outlet guide vane diffuser, wherein said compressor delivers a process gas, wherein said method comprises the following steps:

> a) between a first more closed position of the variable outlet guide vane diffuser and a second more opened position of the variable guide vane outlet diffuser the controlling of the flow of the process gas delivered by the compressor is made by adjusting the position of the variable outlet guide vane diffuser and controlling the speed of the compressor according to a first algorithm.

The preferred application field of the invention is air compression with variable air flow and variable pressure., especially for waste water treatment. A normal pressure increase delivered by these compressors is between 0.3bar and 2bar. The method according to the invention can be applied to a direct driven compressor where the compressor stage is directly mounted to a motor shaft. Alternatively the compressor can be mounted to a gear shaft, which gear is driven by a motor. The compressor runs preferably at a speed above 10.000r/min. The preferred drive is an electric motor drive.

Most conventional compressors for the above defined application operate with variable speed, wherein the delivery of process gas flow is controlled by controlling the speed of the drive. The minimum flow of process gas with these units is obtained by operating at minimum speed and the maximum flow process gas is obtained by operating at the maximum speed.

An alternative conventional solution to control the delivery of process gas of compressors in this field of application is obtained by running the compressor at a fixed speed and controlling the flow of process gas by an inlet guide vane apparatus or an outlet guide vane apparatus both being equipped with adjustable guide vanes. The maximum flow rate is obtained by a maximum opened position of the respective guide vanes and the minimum flow rate is obtained by a minimum opening position of the respective guide vanes with these units.

Another possibility known in the prior art to control the flow of process gas through the compressor is obtained by controlling the position of guide vanes of an outlet guide vane apparatus of a compressor driven by a variable speed drive unit. The speed of said variable speed drive unit usually is determined and controlled by a speed calculation algorithm of a control unit, wherein the speed setpoint usually is calculated depending on at least one of the parameters process gas inlet temperature, guide vane position, pressure difference between inlet and outlet.
This setup obtains the highest efficiency.

One common disadvantage of the three above defined alternatives to operate a compressor is the limitation in maximum volume flow delivered by the compressor, which might not fully exploit the technical features of the compressor and motor drive. Further the efficiency might not be optimal at least with the first two alternatives.

It is therefore one object of the invention to provide a control method of a compressor of the incipiently mentioned type which enables a better exploitation of the technical potential of the compressor and the variable speed drive. Especially it is one object to obtain an extended operation range regarding flow rate and/or pressure increase.

According to the invention there is proposed a method to control a compressor unit of the incipiently defined type comprising the further features of the characterizing portion of claim 1. The respectively depended claims relate to preferred embodiments of the inventions.

One benefit according to the invention is that the operation range of the compressor is significantly extended because when the diffuser is at a maximum opening and the current and speed of the electric drive is not at maximum the speed can being increased until the limits of the drive. This operation point means further increasing the delivered flow of the compressor beyond conventional limits without any technical risk.

Conventionally a compressor unit fulfilling an operation range enabled by the method according to the invention with regard to process gas volume flow and delivery pressure needs a different aerodynamic respectively a different impeller, which might deliver a higher volume. However the change in impeller is allowing only a reduced pressure difference if nothing else is changed. To obtain both, a higher volume delivery at the same pressure difference conventionally a bigger machine size is necessary. According to the invention the operation range can be extended. The invention can alternatively be characterized being a method to control a variable outlet guide vane and variable speed compressor by changing the control method form a first method to a second method, preferably from
controlling the variable outlet guide vane diffuser position depending on pressure and/or flow rate to
controlling the speed of the variable speed drive depending on pressure and/or flow rate with a fixed variable outlet guide vane diffuser position preferably at maximum opening. This change is done when the maximum opening position of the variable guide vane is reached and further increase of flow rate and/or outlet pressure is required.

Since the invention only needs a software change to extend the operation range machine costs are reduced significantly.

According to a preferred embodiment of the invention said first algorithm controlling the drive speed calculates the speed depending on the position of the variable outlet guide vane diffuser, the inlet temperature of the process gas and the difference between inlet pressure of process gas and outlet pressure of process gas. Preferably the first algorithm is designed to operate the compressor unit with the highest efficiency according to power consumption.

Another preferred embodiment of the invention is provided by designing the second algorithm as a 'ramp up' to increase the speed of the variable speed drive with increasing time.

The dependency between the variable speed drive and time can be linearly so that the deliberative is constant.

Another preferred embodiment is provided by a control algorithm, which switches from said first variable outlet guide vane diffuser position depended process gas control to a process gas flow control depending on the speed of the drive only if the maximum speed of the motor according its technical specifications is not reached and only if the maximum current according to the motor specifications is not reached and if the diffuser position is at a maximum opening.

Another preferred embodiment is provided by enabling a manual activation and deactivation of the extended operating range according to the invention.

The above mentioned attributes and other features and advantages of this invention and the manner of attaining them will become more a parent and the invention itself will be better understood by reference to the following description of the currently best mode of carrying out the invention taken in conjunction with the accompanying drawings, wherein

Figure 1    shows a schematic depiction of a compressor unit to be controlled by the method according to the invention,
Figure 2    shows a flow diagram of the method according to the invention.

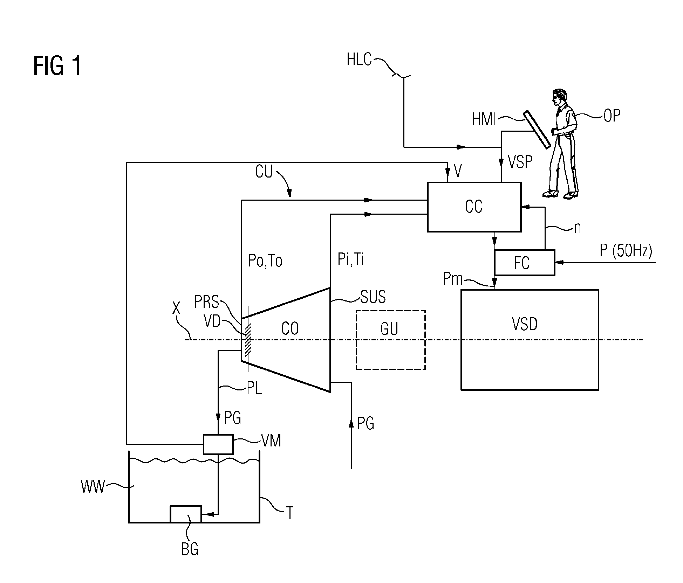

Figure 1 shows a schematically overview of a compressor unit CU to be controlled by the method according to the invention. Said compressor unit CU comprises a compressor CO driven by a variable speed drive VSD both being alined along a common axis X, which is the roation axis of said compressor's CO rotor. If the compress CO is directly driven by the variable speed drive VSD a shaft will extend along the axis X to which an impeller of the compressor CO is directly mounted (embodiment shows this configuration schematically). If an optional gear unit GU is provided between the variable speed drive VSD and the compressor CO the rotation axis of the compressors CO can deviate from the rotation shaft of the variable speed drive VSD. A gear unit GU preferably increases the rotor speed of the variable speed drive to be transmitted to the compressor CO.

A process gas PG enters the compressor CO on a suction side SUS is compressed downstream in said compressor CO, delivered into a pressure line PL at a pressure side PRS of said compressor CO conducting the process gas PG into a bubble generator BG located in a tank T containing waste water WW to be enriched with oxygen from the process gas PG, which process gas PG is air.

The compressor CO comprises a variable outlet guide vane diffuser VD to adjust the diffuser's aerodynamic of the compressor CO to a current process gas PG flow required.

The level of the waste water WW in the tank T varies and therefore the pressure in the pressure PL of the process gas varies between 0.5 - 0.6 bar overpressure with regard to atmosphere.

A compressor control CC is instructed by operating personal OP using a human machine interface HMI. According to the instructions the compressor control CC controls the compressor unit CU. The compressor control CC is connected to pressure sensors, thermal couples and a volume flow meter VM. That pressure sensors are located in the inlet and the outlet of the compressor CO and measure inlet pressure PI, outlet pressure PO. A volume flow meter VM is located downstream the outlet of the compressor CO. At the inlet of the compressor CO an inlet temperature Ti and an inlet pressure Pi are measured and transferred to the compressor control CC as well as an outlet temperature TO and an outlet pressure Po, both being measured at the compressor outlet and transferred to the compressor control CC. According to each given set point of volume flow Vsp the compressor control CC regulates the compressor speed n by controlling a frequency converter FC receiving electrical power P of net frequency of e.g. 50Hz to be converted to a drive speed to supply the variable speed drive VSD, which is a synchronous permanent magnet motor, a suitable power input Pin to drive the compressor CO.

The Volume flow setpoint Vsp might be given by the human machine interface HMI or bei a higher level control HLC.

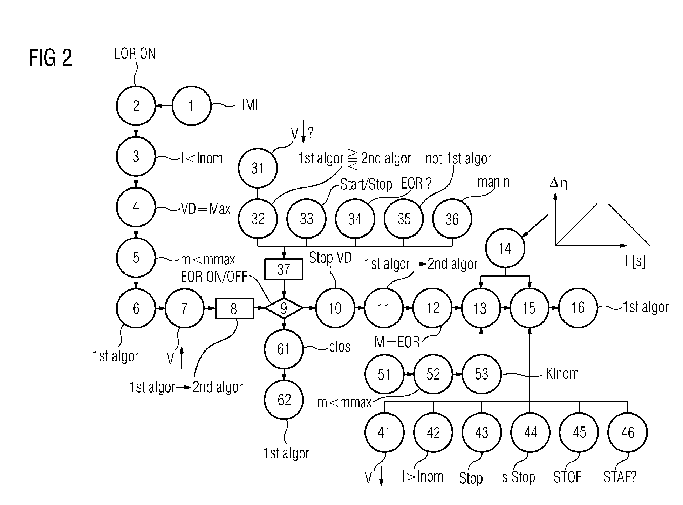

Figure 2 shows a flow diagram illustrating the method to control the compressor unit according to the invention. The flow diagram shows several blocks containing reference numbers. If these geometries, respectively blocks - in the majority circles - are in serial order the respective step and/or requirement check referred to by the reference number must all be fulfilled to pass over to the next step respectively to the next block. Each block might be identified with a step of a preferred embodiment according to a method as claimed.

In step one operating personal OP is using a touch panel of said human machine interface HMI to enable the extended operating range function.

In step two the extended operating range EOR function is verified to be enabled.

In step three the compressor control CC checks if the variable speed drive VSD current I is below nominal current Inom.

In step four the compressor control CC checks if the variable outlet guide vane diffuser is in maximum position, respectively in maximum opening.

In step five the compressor control CC checks if the speed n of the variable speed drive VSD is not in maximum (n<n_max).

In step six the compressor control CC checks if a speed control of the variable speed drive VSD is working according to the first algorithm (1st algor).

The first algorithm controls the speed n in dependency of the position of the variable outlet guide vane diffuser VD, the inlet temperature Ti and the pressure difference required.

In step seven the compressor control CC receives the order for more process gas respectively air to be delivered.

In step eight the compressor control CC deactivates the speed control according to the first algorithm and activates the speed control according to the second algorithm (1st algor => 2nd algor.) basically activating extended operating range EOR according to the invention.

In step nine a periodical request for the activation status of the extended operating rang EOR is illustrated.

The steps 1 - 7 permanently check if the requirements for enabling the extended operating range EOR are fulfilled. Illustrated steps 31 - 37 permanently check if the requirements for enabling the extended operating range EOR are not fulfilled.

In step 31 is checked if a request for less air is pending.

Subsequently in step 32 it is checked if the extended operating range speed is smaller or equal to the speed control speed according to the first algorithm.

In step 33 it is checked if the compressor control is in a start or a stop procedure for the unit.

In step 34 it is checked if the extended operating range is disabled.

In step 35 it is checked if the speed control is not in automatic speed control according to the first algorithm.

In step 36 it is checked if a manual speed control (man n) is enabled.

In step 37 the enabling or disabling order is submitted to step nine according to the evaluation of steps 31 - 36.

If step nine results in disabling extended operation range EOR the flow diagram continues with step 61 and releases the diffuser closing.

In subsequent step 62 the speed control is set to a control according to a first algorithm.

If in step nine the result is enabling extended operating range EOR the variable outlet guide diffuser VD is blocked from closing in step ten.

In subsequent step eleven the speed control is changed from the first algorithm based control to the second algorithm based control, which is basically an extension of the operating range EOR (1st algor =>2nd algor).

In step twelve the speed control change of step eleven is verified (n=EOR).

In step thirteen the speed of the variables speed drive VSD is ramped up according to a ramp provided by step fourteen, which is basically adjustable by input from said human machine interface HMI.

In step thirteen further input is processed from steps 51 to 53.

Steps 51 to 53 combine the requirements of having the request for more air (51), speed of variable speed drive VSD is not at technical maximum speed n_max (52) and current of variable speed drive VSD is below technical nominal current I_nom (53).

If steps 51 - 53 come at some point of time to a negative result the control method enters steps fifteen getting an input of step fourteen how to ramp down the extended operating range speed.

To enter the ramp down procedure steps 41 - 46 are requirements for step fifteen. At least one of the requirements 41 - 46 must be fulfilled respectively an order for less air must be pending (41) or the variable speed drive VSD current I must be above nominal variable speed drive current I_nom (42) or an order for normal stop (Stop) must be pending (43) or an order for soft stop (sStop) must be pending (44) or the stop function must be enabled (45) (STOF) or the start function is not enabled (46) (STAF).

In step sixteen the extended operating range is disabled and normal speed control based on the first algorithm is activated again.

The invention can also be described in terms of differential pressure instead of outlet pressure, wherein said differential pressure is the positive difference between outlet pressure and inlet pressure.

**Claims**

1. Method to control a compressor unit (CU),
   wherein said compressor unit (CU) comprises a variable speed drive (VSD) and a compressor (CO),
   wherein said compressor (CO) comprises a variable outlet guide vane diffuser (VD),
   wherein said compressor (CO) delivers a process gas (PG),

wherein said method comprises the following steps:

a. controlling said the flow of the process gas (PG) delivered by the compressor (CO) by adjusting the position of the variable outlet guide vane diffuser (VD) and controlling the speed (N) of the compressor (CO) according to a first algorithm n=F1 (X1, X2, ...) if

- the variable outlet guide vane diffuser (VD) is positioned between a first more closed position and a second more opened position of the variable outlet guide vanes,

b. controlling the delivery of process gas by increasing the compressor (CO) speed (n) according to a second algorithm, wherein n= F2(Y1,...), and not according to the first algorithm if

- said variable outlet guide vane diffuser (VD) is in said second position and
- said flow of process gas (PG) is to be increased.

2. Method according to claim 1,
wherein said first algorithm is calculating speed (n) depending on a position of said variable outlet guide vane diffuser (VD), wherein

$$n\ (t)\ =\ F1(p,X1,\ldots),$$

wherein n=speed [1/s]
F1=function depending on (p,X1,...)
t=time[s]
p= opening position diffuser[%].

3. Method according to claim 2,
wherein said first algorithm is calculating speed (n) further depending on an inlet temperature (Ti) of process gas (PG) and outlet pressure (po) of process gas (PG)

$$n\ (t)\ =\ F1(p,\ Ti,\ po,\ X1,\ldots),$$

wherein n=speed [1/s]
F1=function depending on (p,X1,...)
po= outlet pressure [bar]
Ti= inlet temperature [K]
t=time[s]
p= opening position diffuser[%]..

4. Method according to claims 1, 2 or 3,
wherein said second algorithm is calculating speed (N) to increase with time depending on current speed and a speed increase rate according to

$$n\ (t)\ =\ n(t0)\ +\ n´(t)*(t-t0),$$

wherein n=speed [1/s]
n'= derivative [1 /(s^2)]
t=time[s]
t0=start time of ramp up [s].

5. Method according to claim 3,
wherein the derivative of speed by time is a constant, $\Delta(n(T))/\Delta(t) = n'(T)$ =constant.

6. Method according to at least one of the claims 1 - 4,

wherein step b. is only performed if the variable speed drive (VSD) operates at a speed below an allowable maximum speed (Nmax) of said variable speed drive (VSD).

7. Method according to at least one of the claims 1 - 5, wherein said variable speed drive (VSD) is an electric motor and step b) is only performed if said variable speed drive (VSD) is operated with an electric current below an allowable maximum current (Imax).

FIG 1

FIG 2

EOR ON

1 — HMI

2

3 — I<Inom

4 — VD=Max

5 — m<mmax

V↓?

31

1st algor ≧ 2nd algor    not 1st algor

Start/Stop  EOR ?        man n

32   33   34   35   36

Δη

14

t [s]

EOR ON/OFF

37   Stop VD    1st algor → 2nd algor

6   7   8   9   10   11   12   13   15   16 — 1st algor

1st algor    V↑

61 — clos    M=EOR

1st algor → 2nd algor

51   52   53 — KInom

62    m<mmax

1st algor

41   42   43   44   45   46

V↓    I>Inom   Stop   s Stop   STOF   STAF?

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 37 059 B (BBC BROWN BOVERI & CIE) 21 August 1958 (1958-08-21) <br> * figures 1-5,7,8 * <br> * column 1, lines 24-43 * <br> * column 3, line 52 - column 4, line 10 * <br> * column 4, line 49 - column 5, line 45 * <br> * column 6, line 59 - column 7, line 16 * <br> * column 7, line 61 - column 8, line 55 * <br> ----- | 1-7 | INV. <br> F04D27/00 |

TECHNICAL FIELDS
SEARCHED        (IPC)

F04D

The present search report has been drawn up for all claims

| Place of search | Date of completion of the search | Examiner |
|---|---|---|
| The Hague | 12 February 2014 | Brouillet, Bernard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

**ANNEX TO THE EUROPEAN SEARCH REPORT
ON EUROPEAN PATENT APPLICATION NO.**

EP 13 18 6292

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2014

| Patent document cited in search report | Publication date | Patent family member(s) | Publication date |
|---|---|---|---|
| DE 1037059 B | 21-08-1958 | NONE | |

EPO FORM P0459

For more details about this annex : see Official Journal of the European Patent Office, No. 12/82